# EUROPÄISCHE PATENTSCHRIFT

(11) **EP 0 501 324 B1**
(45) Veröffentlichungstag und Bekanntmachung des Hinweises auf die Patenterteilung: **15.05.1996**
(21) Anmeldenummer: 92102910.4
(22) Anmeldetag: 21.02.1992
(51) Int. Cl.: H04Q 11/04, H04M 11/06

(54) **Einrichtung und Verfahren zur D-Kanal-Paketvermittlung**
Apparatus and method for D-channel packet switching
Dispositif et méthode pour la commutation en paquets sur le canal D

(30) Priorität: 27.02.1991 DE 4106183
(43) Veröffentlichungstag der Anmeldung: 02.09.1992
(73) Patentinhaber: Alcatel SEL Aktiengesellschaft, D-70435 Stuttgart (DE); ALCATEL N.V., NL-1077 XX Amsterdam (NL)
(72) Erfinder: Siegmund, Gerd, W-7000 Stuttgart 40 (DE)
(74) Vertreter: Pohl, Herbert, Dipl.-Ing

(56) Entgegenhaltungen:
- NTZ NACHRICHTENTECHNISCHE ZEITSCHRIFT Bd. 40, Nr. 5, Mai 1987, BERLIN DE Seiten 338 - 344 M.WIZGALL
- NTT REVIEW Bd. 1, Nr. 4, November 1989, TOKYO JP Seiten 61 - 73 H.YAMASHITA ET AL.
- GLOBECOM '86, SESSION 10, PAPER 2. Bd. 1, 1. Dezember 1986, HOUSTON US Seiten 1 - 5 A.CHALET
- IEEE GLOBAL TELECOMMUNICATIONS CONFERENCE & EXIBITION, SESSION 37, PAPER 4. Bd. 3, 28. November 1988, Hollywood US Seiten 1-10 N.SKAPERDA
- PROCEEDINGS OF THE NATIONAL COMMUNICATIONS FORUM Bd. 41, Nr. 2, 1987, OAK BROOK, ILLINOIS US Seiten 1041 - 1047 J.L.NEIGH
- PATENT ABSTRACTS OF JAPAN vol. 14, no. 401 (E-971)3. August 1990 & JP-A-21 51 153 (Hitachi)

## Beschreibung

Die Erfindung betrifft eine Einrichtung zur D-Kanal-Paketvermittlung über eine Digital-Vermittlungsstelle in einem diensteintegrierenden digitalen Fernmeldenetz und ein eine solche Einrichtung verwendendes Verfahren zur D-Kanal-Paketvermittlung.

Aus dem Stand der Technik ist eine Einrichtung und ein Verfahren zum Datenaustausch in Form von Paketdatenaustausch bekannt. Bei dieser Vorrichtung und dem Verfahren übernimmt eine spezielle Steuerung in einem Steuerrechner eines Anschlußteils die Bearbeitung einer Schicht-3. Dies erfolgt in der Datentransferphase, und Datenpakete werden dann mittels einer Steuerfunktion für den Paketdatenaustausch unter Benutzung des "Weges 3" direkt zum Steuerrechner des Ziel-Anschlußteils übertragen. Unter Verwendung dieser Vorrichtung und dieses Verfahrens müssen keine weiteren Steuerrechner beteiligt sein, was ein effizientes und für das System belastungsarmes Verfahren darstellt ("Datenkommunikation mit Nebestellenanlagen", M. Wizgall, aus: NTZ Nachrichtentechnische Zeitschrift Bd. 40, Nr. 5, Mai 87, Berlin).

Für das diensteintegrierende digitale Fernmeldenetz - ISDN - haben Schätzungen ergeben, daß ca. 2 Mio potentielle Benutzer an einem ISDN-Paketdienst mit geringer Übertragungsgeschwindigkeit (D-Kanal) interessiert sind. Dazu werden derzeit durch das ETSI (European Telecommunications Standards Institute) Standards erstellt, die die verschiedenen Arten von Zugängen zu X.25-Paketdiensten durch ISDN-Teilnehmer definieren. Dabei soll eine im ISDN integrierte Paketvermittlung im D-Kanal realisiert werden ("Einführung von ISDN", Elektrisches Nachrichtenwesen, Band 64, Nr. 1, 1990, Seiten 41 bis 50).

Um den Anschluß von Datenendeinrichtungen mit X.25-Schnittstellen an einer Digital-Vermittlungsstelle im ISDN zu ermöglichen, wird eine CCITT X.31 Empfehlung entsprechend genutzt.

Dabei wird zur Vermittlung von Paketdaten im D-Kanal über eine Digital-Vermittlungsstellen bekannter Weise ein sogenannter Frame Handler (Rahmenbehandlung) oder ein sogenannter Frame Switch in eine Verbindung eingeschleift, um die Kommunikation zwischen zwei Datenendgeräten, OSI-Schicht-2- und OSI-Schicht-3-Funktionen, zu steuern. Ein solcher Frame Switch besteht aus einer Rechnereinheit und einer Vermittlungseinheit und steuert die Verbindungskontrolle sowie die Bearbeitung der Paketdaten. Dadurch wird die für die OSI-Schicht-3-Funktionen notwendige Rechnereinheit durch die D-Kanal-Paketbehandlung sehr stark belastet.

Der Erfindung liegt deshalb die Aufgabe zugrunde, eine Einrichtung und ein Verfahren zur D-Kanal-Paketvermittlung anzugeben, die bzw. das eine wesentliche Vereinfachung der Steuerungs- und Paketübertragungsfunktionen ermöglicht.

Diese Aufgabe wird erfindungsgemäß durch die Lehre des Patentanspruchs 1 und des Patentanspruchs 4 gelöst.

Aufgrund der erfindungsgemäßen Einrichtung wird eine direkte Verbindung zwischen einer ersten und einer zweiten alle OSI-Schicht-2-Funktionen steuernden Steuereinheit der Vermittlungsstelle zum Paketdatenaustausch aufgebaut. Der Verbindungsaufbau wird dabei durch eine alle OSI-Schicht-3-Funktionen steuernde dritte Steuereinheit veranlaßt, wobei die dritte Steuereinheit während des Paketdatenaustausches abgekoppelt und somit völlig unbelastet bleibt.

Ein bisher notwendiger Frame Handler kann somit entfallen, da die D-Kanal-Paketvermittlung mittels ohnehin vorhandener OSI-Schicht-2- und OSI-Schicht-3-Steuereinheiten durchgeführt wird.

Weitere vorteilhafte Ausgestaltungen gemäß der Erfindung sind den Unteransprüchen zu entnehmen.

Im folgenden wird die erfindungsgemäße Lehre anhand eines Ausführungsbeispiels näher erläutert.

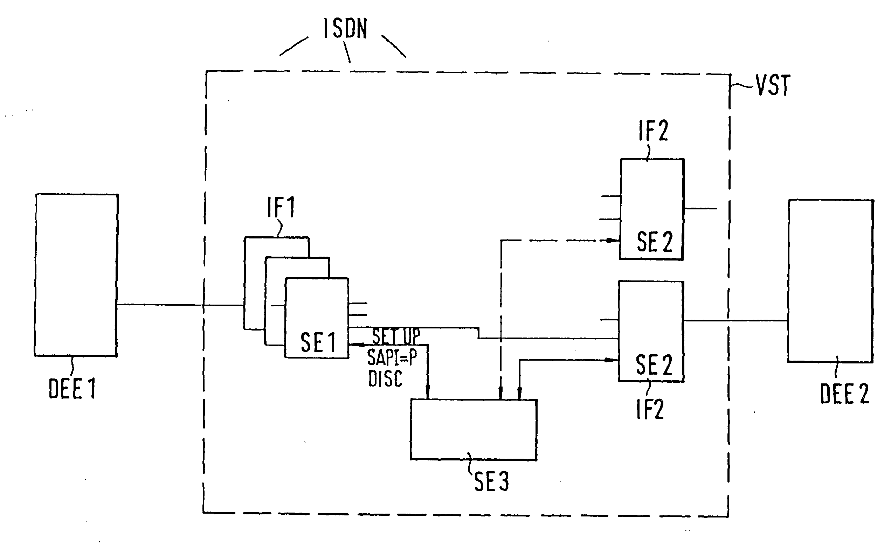

Zur D-Kanal-Paketvermittlung zwischen einer ersten Datenendeinrichtung DEE1 und einer zweiten Datenendeinrichtung DEE2, wie in der Figur gezeigt, über eine Digital-Vermittlungsstelle VST in einem diensteintegrierenden digitalen Fernmeldenetz ISDN, weist die Vermittlungsstelle eine Vielzahl erster Schnittstellen IF1 und eine Vielzahl zweiter Schnittstellen IF2 auf, an die die Datenendeinrichtungen verbindbar sind. Jede erste Schnittstelle IF1 und jede zweite Schnittstelle IF2 enthält eine alle OSI-Schicht-2-Funktionen (OSI = Open System Interconnection, vgl. Unterrichtsblätter der Deutschen Bundespost, 43. Jahrgang, Heft 4, Seiten 167 bis 193, "Paketvermittlungstechnik") steuernde erste Steuereinheit SE1 bzw. zweite Steuereinheit SE2, wobei eine alle OSI-Schicht-3-Funktionen steuernde dritte Steuereinheit SE3 der Vermittlungsstelle VST mit den ersten Steuereinheiten SE1 in Verbindung steht.

Die erste Schnittstelle, z.B. eine ISDN-S₀-Schnittstelle enthält eine Vielzahl von mit der ersten Steuereinheit SE1 verbundene Eingänge und Ausgänge, wobei die Ausgänge, vgl. Figur, mit Eingängen der Vielzahl von zweiten Schnittstellen IF2, je nach Zieladresse vorzugsweise über einen Bus und mit Eingängen der dritten Steuereinheit SE3 verbindbar sind

Zur Paketdatenübertragung im D-Kanal sind die Signalisierung und die Paketdaten durch die Datenanschlußpunkt-Kennung SAPI=s, p (Service Access Point Identifier) gekennzeichnet.

Aufgrund einer Signalisierung eines ankommenden Rufes SAPI=s von der ersten Datenendeinrichtung DEE1 über die erste Schnittstelle IF1, gesteuert durch die erste Steuereinheit SE1, wird eine OSI-Schicht-3-Verbindungsaufbau-Meldung (enthält Zielinformation = Rufnummer) SET UP zur dritten Steuereinheit SE3 der Vermittlungsstelle VST übertragen.

Nach dem Empfang einer Paketdaten-Kennung SAPI=P, steuert die dritte Steuereinheit SE3 einen Verbindungsaufbau zwischen einer der zweiten Datenendeinrichtung DEE2 (entsprechend der Zielinformation) zugeordneten zweiten Steuereinheit SE2 und der der ersten Datenendeinrichtung DEE1 zugeordneten ersten Steuereinheit SE1.

Nach erfolgtem Verbindungsaufbau werden nun die Paketdaten direkt zwischen der ersten Steuereinheit SE1 und der zweiten Steuereinheit SE2 (reine OSI-Schicht-2-Funktion) ausgetauscht, und zwar ohne weiterer notwendiger Beteiligung der dritten Steuereinheit SE3. Die OSI-Schicht-3-Verbindungen zur dritten Steuereinheit SE3 können für die Zeitdauer des direkten Datenaustausches ausgelöst werden.

Durch die erfindungsgemäße direkte Verbindung der OSI-Schicht-2-Steuereinheiten, veranlaßt durch die OSI-Schicht-3-Steuereinheit, wird die OSI-Schicht-3-Steuereinheit SE3 nicht durch D-Kanal-Paketdaten SAPI=P belastet. Deshalb kann ein bisher notwendiger speziell in die Verbindung eingeschleifter Frame Handler entfallen.

Nach dem Empfang einer OSI-Schicht-2-Paketdaten-Endekennung in der ersten Steuereinheit SE1, wird der dritten Steuereinheit SE3 der Vermittlungsstelle VST eine Verbindungs-Abbaumeldung DISC gesendet. Diese steuert dann den Verbindungsabbau zwischen der ersten und zweiten Steuereinheit bis hin zu der ersten und zweiten Datenendeinrichtung.

Somit läßt sich ohne zusätzlicher Hardwareaufwand mittels der normalerweise ohnehin vorhandenen Steuereinheiten für die OSI-Schicht-2 in eine Vermittlungsstelle ein direkter D-Kanal-Paketdatenaustausch, gesteuert durch eine OSI-Schicht-3-Steuereinheit, durchführen.

Selbstverständlich kann die Digital-Vermittlungsstelle auch eine private Telekommunikationsanlage sein.

## Patentansprüche

1. Einrichtung zur D-Kanal-Paketvermittlung über eine Digital-Vermittlungsstelle (VST) in einem diensteintegrierenden digitalen Fernmeldenetz (ISDN), zwischen einer ersten Datenendeinrichtung (DEE1) und einer zweiten Datenendeinrichtung (DEE2), die mit einer ersten Schnittstelle (IF1) von einer Vielzahl von ersten Schnittstellen der Vermittlungsstelle (VST) bzw. mit einer zweiten Schnittstelle (IF2) von einer Vielzahl von zweiten Schnittstellen der Vermittlungsstelle (VST) verbindbar sind,
bei der jede erste (IF1) und jede zweite Schnittstelle (IF2) eine alle OSI-Schicht-2-Funktionen steuernde erste Steuereinheit (SE1) bzw. zweite Steuereinheit (SE2) enthalten,
und bei der eine alle OSI-Schicht-3-Funktionen steuernde dritte Steuereinheit (SE3) der Vermittlungsstelle (VST) mit den ersten Steuereinheiten (SE1) in Verbindung steht
und durch die dritte Steuereinheit (SE3) entsprechend einer Verbindungsaufbauf-Meldung mit der darin enthaltenen Zielinformation und nach dem Empfang einer Paketdaten-Kennung (SAPI=p) von der ersten Datenendeinrichtung (DEE1) eine Verbindung
zwischen der zugeordneten ersten Steuereinheit (SE1) und der der zweiten Datenendeinrichtung (DEE2) zugeordneten zweiten Steuereinheit (SE2) zum direkten Austauschen von Paketdaten zwischen den beiden OSI-Schicht-2-Steuereinheiten aufbaut,
und für die Zeitdauer des direkten Austausches durch die dritte Steuereinheit (SE3) das Auslösen der OSI-Schicht-3-Verbindung gesteuert wird.

2. Einrichtung nach Anspruch 1, bei der die erste Schnittstelle (IF1) eine mit der ersten Steuereinheit (SE1) verbundene Vielzahl von Eingängen und Ausgängen aufweist, wobei die Ausgänge mit Eingängen der Vielzahl von zweiten Schnittstellen (IF2) und mit Eingängen der dritten Steuereinheit (SE3) verbindbar sind.

3. Einrichtung nach Anspruch 2, bei der die Ausgänge der ersten Schnittstelle und die Eingänge der zweiten Schnittstelle über einen Bus verbindbar sind.

4. Verfahren zur D-Kanal-Paketvermittlung mittels einer Einrichtung nach Anspruch 1, bestehend aus folgenden Schritten:
- Signalisieren eines von der ersten Datenendeinrichtung (DEE1) ankommenden Rufes durch eine OSI-Schicht-3-Verbindungsaufbau-Meldung (SET UP) zur dritten Steuereinheit (SE3) der Vermittlungsstelle (VST)
- nach Empfangen einer Paketdaten-Kennung (SAPI=p), steuern eines Verbindungsaufbaus durch die dritte Steuereinheit (SE3) entsprechend einer in der Verbindungsaufbau-Meldung enthaltenen Zielinformation zwischen einer der zweiten Datenendeinrichtung (DEE2) zugeordneten zweiten Steuereinheit (SE2) der Vermittlungsstelle (VST) und der der ersten Datenendeinrichtung (DEE1) zugeordneten ersten Steuereinheit (SE1) zum direkten austauschen von Paketdaten zwischen den beiden OSI-Schicht-2-Steuereinheiten und
- Auslösen der OSI-Schicht-3-Verbindungen mit der dritten Steuereinheit (SE3),
- nach Empfangen einer OSI-Schicht-2-Paketdaten-Endekennung in der ersten Steuereinheit (SE1), senden einer Verbindungs-Abbaumeldung (DISC) zur dritten Steuereinheit (SE3) und
- Steuern eines Verbindungsabbaus zwischen der ersten und zweiten Steuereinheit und zu den ersten und zweiten Datenendeinrichtungen durch die dritte Steuereinheit (SE3).

## Claims

1. A facility for D channel packet switching through a digital exchange (VST) in an integrated services digital network (ISDN) between a first data terminal (DEE1) and a second data terminal (DEE2) which are connectable to a first interface (IF1) of a plurality of first interfaces of the exchange (VST) and to a second interface (IF2) of a plurality of second interfaces of the exchange (VST), respectively,
each of the first interfaces (IF1) containing a first control unit (SE1) controlling all OSI Layer 2 functions, and each of the second interfaces (IF2) containing a second control unit (SE2) controlling all OSI Layer 2 functions;
the exchange (VST) further including a third control unit (SE3) controlling all OSI Layer 3 functions which is connected to the first control units (SE1) and which, in response to a setup message containing destination information and after receipt of a packet-data identifier (SAPI=p) from the first data terminal DEE1), sets up a connection between the associated first control unit (SE1) and the second control unit (SE2) associated with the second data terminal (DEE2) for direct transfer of packet data between the two OSI Layer 2 control units; and
the release of the OSI Layer 3 connection being controlled by the third control unit (SE3) for the duration of the direct transfer.

2. A facility as claimed in claim 1 wherein the first interface (IF1) has a plurality of inputs and outputs connected to the first control unit (SE1), the outputs being connectable to inputs of the plurality of second interfaces (IF2) and to inputs of the third control unit (SE3).

3. A facility as claimed in claim 2 wherein the outputs of the first interface and the inputs of the second interface are interconnectable via a bus.

4. A method of switching packets of data in the D channel using a facility as claimed in claim 1, comprising the following steps:
- signalling an incoming call from the first data terminal (DEE1) by an OSI Layer 3 setup message (SET UP) to the third control unit (SE3) of the exchange (VST);
- after receipt of a packet-data identifier (SAPI=p), controlling, in accordance with destination information contained in the setup message, the setup of a connection between the second control unit (SE2) associated with the second data terminal (DEE2) and the first control unit (SE1) associated with the first data terminal (DEE1) for direct transfer of packet data between the two OSI Layer 2 control units;
- releasing the OSI Layer 3 connections with the third control unit (SE3);
- after receipt of an OSI Layer 2 packet data end identifier in the first control unit (SE1), sending a disconnect message (DISC) to the third control unit (SE3); and
- controlling a release of the connection between the first and second control units and to the first and second data terminals by means of the third control unit (SE3).

## Revendications

1. Dispositif pour la commutation de paquets sur le canal D par l'intermédiaire d'un central téléphonique numérique (VST) dans un réseau numérique à intégration de services (RNIS), entre un premier équipement terminal de traitement des données (DEE1) et un second équipement terminal de traitement des données (DEE2), qui peuvent être reliés avec une première interface (IF1) d'une pluralité de premières interfaces du central téléphonique (VST) ou avec une seconde interface (IF2) d'une pluralité de secondes interfaces du central téléphonique VST),
dans le cas duquel chaque première (IF1) et chaque seconde (IF2) interfaces contiennent une première unité de commande (SE1) ou une seconde unité de commande (SE2) commandant toutes les fonctions de couche 2 en interconnexion de systèmes ouverts ISO,
et dans le cas duquel une troisième unité de commande (SE3), commandant toutes les fonctions de couche 3 ISO, du central téléphonique (DST), est reliée aux premières unités de commande (SE1).
et, sous l'action de la troisième unité de commande (SE3), en correspondance avec une annonce d'établissement d'une liaison et avec l'information relative au point de destination qui y est contenue, et après la réception d'une identification des données en paquets (SAPI=p) en provenance du premier équipement terminal de traitement des données (DEE1), une liaison s'établit entre la première unité de commande correspondante (SE1) et la seconde unité de commande (SE2) correspondant au second équipement terminal de traitement de données (DEE2) pour l'échange direct de données en paquets entre les deux unités de commande de couche 2 ISO,
et, pendant la durée de l'échange direct, la suppression de la liaison couche 3 ISO est commandée par la troisième unité de commande (SE3).

2. Dispositif selon la revendication 1, dans le cas duquel la première interface (IF1) présente une pluralité d'entrées et de sorties reliées à la première unité de commande SE1, les sorties pouvant être reliées avec des entrées de la pluralité des secondes interfaces (IF2) et avec des entrées de la troisième unité de commande (SE3).

3. Dispositif selon la revendication 2, dans le cas duquel les sorties de la première interface et les entrées de la seconde interface peuvent être reliées par l'intermédiaire d'un bus.

4. Procédé pour la commutation de paquets sur le canal D au moyen d'un dispositif de la revendication 1, constitué des pas suivants:
- signalisation d'un appel provenant du premier équipement terminal de traitement des données (DEE1) par une annonce (SET UP) d'établissement de la liaison couche 3 - ISO pour la troisième unité de commande (SE3) du central téléphonique (VST),
- après réception d'une identification des données des paquets (SAPI=p), commande, par la troisième unité de commande (SE3). de l'établissement d'une liaison en correspondance avec une information, relative au point de destination, contenant une annonce d'établissement d'une liaison entre une seconde unité de commande (SE2), correspondant au second équipement terminal de traitement des données (DEE2), du central téléphonique (VST) et la première unité de commande (SE1), correspondant au premier équipement terminal de traitement de données (DDE1) pour échange direct de données en paquets entre les deux unités de commande couche 2 ISO et
- suppression des liaisons couche 3 - ISO avec la troisième unité de commande (SE3).
- après réception d'une identification finale des données de paquets couche 2 ISO dans la première unité de commande (SE1), envoi à la troisième unité de commande (SE3) d'une annonce de suppression de liaison (DISC) et
- commande, par la troisième unité de commande SE3), d'une suppression de la liaison entre la première et la seconde unités de commande et avec le premier et le second équipements terminaux de traitement de données.
